# FASCICULE DE BREVET EUROPEEN

(11) **EP 3 416 874 B1**
(45) Date de publication et mention de la délivrance du brevet: **02.09.2020**
(21) Numéro de dépôt: 16809484.5
(22) Date de dépôt: 08.11.2016
(51) Int. Cl.: B62D 35/00, B62D 35/02

(54) **DISPOSITIF DÉFLECTEUR AÉRODYNAMIQUE POUR ROUE DE VÉHICULE AUTOMOBILE**
AERODYNAMISCHER DEFLEKTOR FÜR EIN KRAFTFAHRZEUGRAD
AERODYNAMIC DEFLECTOR DEVICE FOR A MOTOR VEHICLE WHEEL

(30) Priorité: 10.12.2015 FR 1562112
(43) Date de publication de la demande: 26.12.2018
(73) Titulaire: Valeo Systemes Thermiques, 78322 Le Mesnil Saint-Denis Cedex (FR)
(72) Inventeur: THULLIER, Christophe, 78180 Montigny-le-Bretonneux (FR); GERBER, Sylvain, 91320 Wissous (FR)
(74) Mandataire: Tran, Chi-Hai
(86) Numéro de dépôt international: PCT/FR2016/052895
(87) Numéro de publication internationale: WO 2017/098100

(56) Documents cités:
- DE-A1- 4 209 164
- JP-A- 2006 069 396
- JP-U- 60 099 173
- US-A1- 2008 100 071

## Description

L'invention concerne un dispositif déflecteur aérodynamique de roue de véhicule automobile.

Une préoccupation constante dans le domaine automobile est la consommation de carburant et l'impact écologique du véhicule notamment par ses émissions de gaz à effet de serre comme le CO2 ou par des gaz toxiques comme par exemple les Nox. Pour diminuer la consommation en carburant, les constructeurs automobiles tentent de rendre d'une part les moteurs de propulsion plus efficaces et d'autre part de diminuer la consommation des équipements du véhicule.

Un facteur important dans la consommation d'un véhicule est déterminé par la prise au vent ou l'aérodynamisme du véhicule.

En effet, l'aérodynamisme d'un véhicule automobile est une caractéristique importante car il influence notamment la consommation de carburant (et donc la pollution) ainsi que les performances notamment d'accélération dudit véhicule.

En particulier, la trainée ou la résistance aérodynamique à l'avancement joue un rôle déterminant, notamment à des vitesses plus élevées, car la trainée varie en fonction du carré de la vitesse de déplacement du véhicule.

Selon les modèles utilisés en mécanique des fluides, on peut par exemple quantifier la force de traînée qui s'exerce sur un véhicule automobile à l'aide d'une surface de référence S. En première approximation, la force de traînée, notée Fx, est égale à q^{∗}S^{∗}Cx, où q désigne la pression dynamique (q = ½ ρ^{∗}V², p désignant la masse volumique de l'air et V la vitesse du véhicule par rapport à l'air), Cx désignant un coefficient de traînée propre au véhicule.

La surface de référence utilisée pour un véhicule automobile correspond habituellement à sa surface frontale. On comprend donc que pour réduire la traînée, il faut viser à réduire la surface de référence.

L'analyse des phénomènes aérodynamiques plus en détail a permis de mettre à jour aussi le rôle déterminant des roues de véhicule.

En effet, les roues peuvent augmenter considérablement la résistance aérodynamique, car ils génèrent des turbulences lorsque le flux d'air frappe la roue en rotation. A des vitesses élevées, il a été démontré que les roues avant peuvent contribuer jusqu'à une valeur de 30% à la surface de référence.

En effet, lorsqu'un véhicule automobile se déplace, l'air dans lequel il évolue est dévié en fonction du profil du véhicule. L'air ainsi dévié atteint notamment le passage de roue. Le passage de roue est une cavité aménagée dans la carrosserie du véhicule, et entourant une roue (cela correspond à l'aile du véhicule). Le passage de roue remplit plusieurs fonctions. Il limite notamment (en les retenant) les projections d'eau, de boue ou d'autres matériaux sur lesquels la roue est susceptible de circuler et qu'elle peut être amenée à expulser lors de sa rotation. L'air atteignant le passage de roue circule notamment dans l'espace étroit séparant la roue du passage de roue. Il est connu qu'à cette occasion, des turbulences se forment autour des tours de roue et créent un frein aérodynamique.

Il est connu de placer un déflecteur fixe devant une roue de véhicule automobile. Un tel déflecteur fixe, qui peut prendre la forme d'une bavette (souvent d'environ 5cm de hauteur), permet de réduire les turbulences dans le passage de roue.

Cependant, un tel déflecteur fixe risque d'être endommagé lors de franchissements d'obstacles (trottoir, ralentisseur de type dos d'âne, etc.).

Pour résoudre ce problème, on peut envisager un dispositif déflecteur équipé d'un actionneur.

Cependant, il faut veiller à pouvoir optimiser le dimensionnement de l'actionneur aussi bien en encombrement qu'en consommation électrique.

La présente invention vise à pallier au moins partiellement certains des inconvénients décrits ci-dessus en proposant un dispositif déflecteur aérodynamique équipé d'un actionneur dont la taille et la puissance peuvent être limitées.

A cet effet, l'invention a pour objet un dispositif déflecteur aérodynamique pour roue de véhicule automobile, comprenant :
- un support allongé configuré pour être monté sur un véhicule automobile, le support présente un axe longitudinal sensiblement parallèle à l'axe longitudinal du véhicule,
- une paroi déflectrice monté mobile sur le support entre d'une part une position escamotée, dans laquelle, à l'état monté ladite paroi déflectrice est relevée par rapport au support, et d'autre part une position déployée, dans laquelle, à l'état monté, ladite paroi déflectrice est abaissée par rapport au support, et
- un actionneur configuré pour déplacer ladite paroi déflectrice entre les positions escamotée et déployée,
caractérisé en ce que la paroi déflectrice est montée mobile en rotation sur le support autour d'un axe de rotation orienté sensiblement parallèle à l'axe longitudinal du support et entraîné par l'actionneur.

En d'autres termes, grâce à un pivotement autour d'un axe de rotation orienté sensiblement parallèle à l'axe longitudinal du support, ou sensiblement parallèle à la direction de l'écoulement de l'air, l'abaissement ou le déploiement de la paroi déflectrice est moins gênée par l'écoulement de l'air. Ceci permet d'optimiser le dimensionnement de l'actionneur aussi bien en encombrement qu'en consommation électrique.

Le dispositif déflecteur aérodynamique selon l'invention peut comporter une ou plusieurs des caractéristiques suivantes prises seules ou en combinaison :
La paroi déflectrice possède par exemple en coupe longitudinale une forme de rampe, en particulier de rampe incurvée.

Il est par exemple envisagé que le rayon de courbure de la rampe incurvée diminue progressivement depuis l'extrémité distale destinée à être disposée éloignée de la roue vers l'extrémité proximale destinée à être disposée à proximité de la roue.

Selon un autre aspect, la paroi déflectrice possède à l'extrémité proximale destinée à être disposée à proximité de la roue en coupe transversale une forme de « U », le fond du « U » étant éloigné de l'axe de rotation.

Le dispositif comprend une paroi de fermeture située à l'extrémité proximale de la paroi déflectrice.

Selon encore un autre aspect, le support est réalisé en tant que cadre de forme rectangulaire et configuré à être fixé au châssis d'un véhicule automobile.

L'actionneur comprend notamment un organe de sortie rotatif en prise directe ou indirecte avec ledit axe de rotation.

L'axe de rotation portant la paroi déflectrice est par exemple configuré pour effectuer une rotation de 180° entre les positions escamotée et déployée.

L'invention concerne également un véhicule automobile, caractérisé en ce qu'il comprend au moins un dispositif déflecteur aérodynamique tel que défini ci-dessus et disposé en amont d'une roue de véhicule automobile.

D'autres avantages et caractéristiques apparaîtront à la lecture de la description de l'invention, ainsi que des dessins annexés sur lesquels :
- les figures 1A et 1B montrent des schémas de côté du dispositif déflecteur aérodynamique selon un premier mode de réalisation dans deux positions différentes,
- les figures 2A à 2C montrent des schémas de côté du dispositif déflecteur aérodynamique selon un second mode de réalisation dans trois positions différentes.

Dans la description, des éléments identiques sont identifiés par les mêmes numéros de référence.

Dans la présente description, on entend par « en amont » qu'un élément est placé avant un autre par rapport au sens de circulation du flux d'air. A contrario, on entend par « en aval » qu'un élément est placé après un autre par rapport au sens de circulation du flux d'air. Par supérieur, inférieur, haut et bas, on se réfère à la disposition des éléments sur les figures, ce qui correspond généralement à la disposition des éléments à l'état monté dans un véhicule automobile.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Un repère LH ou LTH sur une figure indique respectivement les directions longitudinale (L), transversale (T) et en hauteur (H) correspondant à des directions x-y-z du véhicule.

Dans la description, on peut indexer certains éléments ou paramètres, comme par exemple premier élément ou second élément ainsi que premier paramètre et second paramètre ou encore premier critère et second critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps.

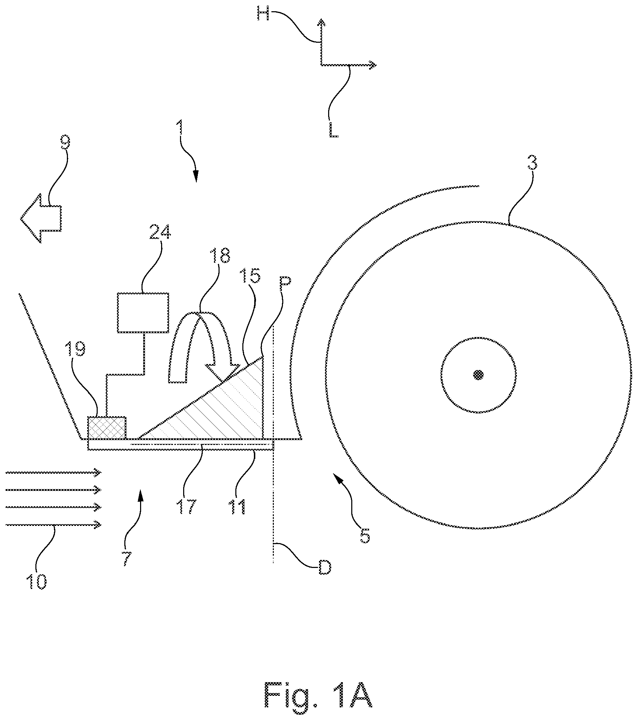

La figure 1A montre un schéma simplifié de côté d'une partie avant 1 d'un véhicule automobile, en particulier une roue 3 et un passage de roue 5 muni d'un dispositif déflecteur aérodynamique 7 pour roue.

Sur le schéma de la figure 1A, le véhicule se déplace selon la flèche 9, de sorte qu'un flux d'air 10 impacte le véhicule et notamment la roue 3 en sens inverse.

Le dispositif déflecteur aérodynamique 7 comprend un support 11 allongé configuré pour être monté sur un véhicule automobile avec son axe longitudinal sensiblement parallèle à l'axe longitudinal « L » du véhicule, configuré pour être par exemple sur le châssis en amont de la roue 3 dans un logement prévu à cet effet, par exemple au niveau d'un passage de roue 5.

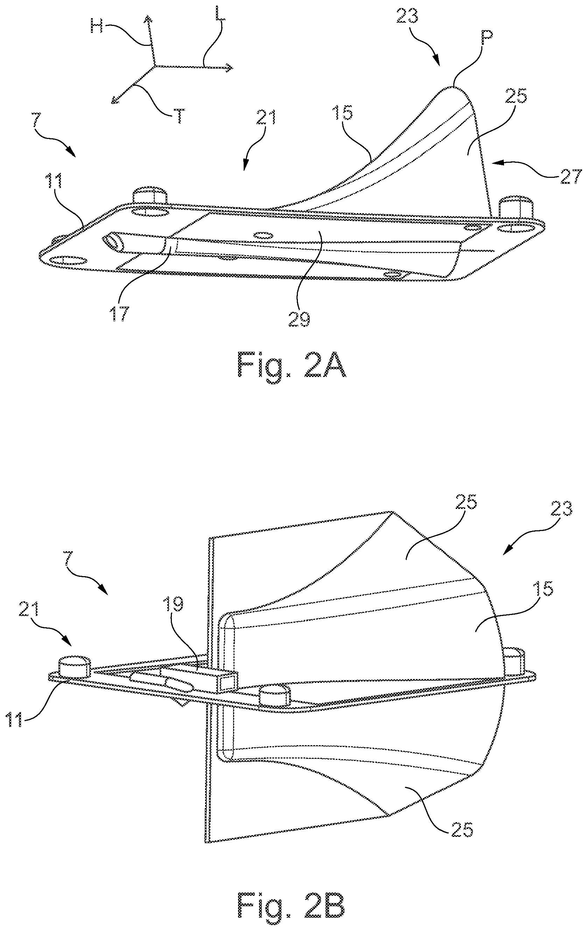

Comme cela sera mieux visible sur les figures 2A à 2C, dans le présent mode de réalisation, le support 11 est réalisé par exemple en tant que cadre configuré pour être fixé au véhicule, par exemple par vissage ou par des agrafes ou tout autre moyen de fixation.

Le dispositif déflecteur aérodynamique 7 comprend de plus une paroi déflectrice 15.

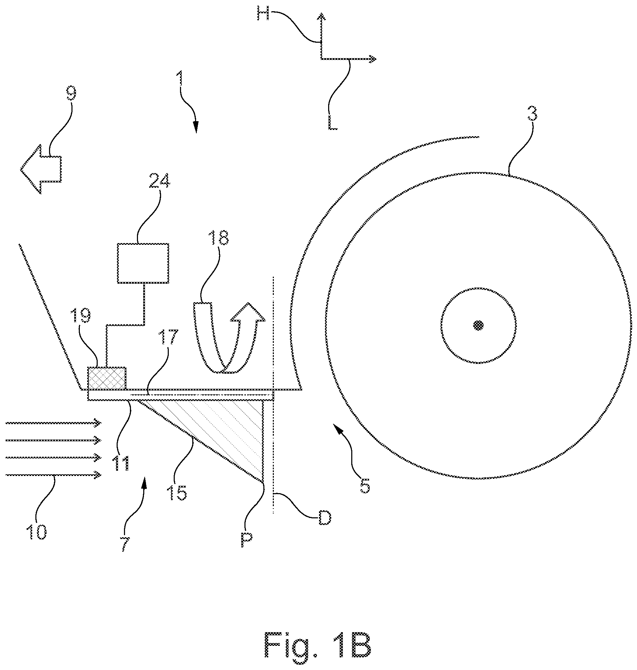

Comme on le voit sur les figures 1A, 1B, cette paroi déflectrice 15 possède en coupe longitudinale, c'est-à-dire dans le sens de la longueur de la paroi déflectrice 15 une forme de rampe. Dans le présent mode de réalisation cette rampe formée par la paroi déflectrice 15 est un plan.

Cette paroi déflectrice 15 est mobile en rotation entre d'une part une position escamotée (voir figure 1A) et d'autre part une position abaissée ou déployée (voir figure 1B).

Dans la position escamotée, la paroi déflectrice 15 est relevée dans un logement situé en amont du passage de roue 5 et ne fait donc aucun obstacle au flux d'air 10 impactant la roue 3.

Cette position escamotée est généralement adoptée pour des vitesses peu élevées, par exemple inférieures à 50km/h.

En effet, pour de petites vitesses, l'effet de la paroi déflectrice 15 est peu important, notamment par rapport à la surface de référence.

De plus, c'est à ces vitesses inférieures à environ 50km/h que l'on franchit des obstacles comme par exemple des trottoirs, des ralentisseurs de type dos d'âne, coussin berlinois, etc. En prenant la position escamotée à ces vitesses faibles, la paroi déflectrice 15 est protégée contre la casse.

Dans la position abaissée ou déployée montrée à la figure 1B, la paroi déflectrice 15 est placée en amont de la roue 3 du véhicule en étant au moins partiellement en dessous de l'axe de rotation 17 de ladite roue 3.

C'est dans cette position abaissée ou active, que le flux d'air 11 est dévié de manière à ne pas pouvoir s'engouffrer dans le passage de roue 5. On évite ainsi la création des turbulences dans le passage de roue 5 qui contribuent à l'augmentation significative de la surface de référence.

Ainsi, la force de trainée peut être contenue à des valeurs plus acceptables.

Pour pouvoir opérer le déplacement entre la position escamotée (figure 1A) et la position déployée (figure 1B), la paroi déflectrice 15 est montée mobile en rotation sur le support 11 autour d'un axe de rotation 17 orienté sensiblement parallèle à l'axe longitudinal du support 11. L'axe de rotation 17 est dans le présent cas un axe physique indiqué sur les figures par un trait pointillé. Il peut par exemple s'agir d'un tube sur lequel on fixe la paroi déflectrice et dont les extrémités sont maintenues par des paliers rotatifs.

En d'autres termes, cet axe de rotation 17 est orienté sensiblement perpendiculairement par rapport à une ligne D théorique définie par la position relevée et abaissée de la paroi déflectrice. On obtient cette ligne D par exemple en reliant la pointe P de la paroi déflectrice 15 dans les positions escamotée et déployée. On comprend donc que l'axe de rotation 17 est à l'état monté sur le véhicule sensiblement parallèle à l'axe longitudinal L du véhicule. Autrement dit, l'axe de rotation 17 peut aussi être défini comme étant l'axe de rotation s'étendant sur la longueur du support 11, le support 11 étant inscrit dans un plan allongé.

Comme indiqué par la flèche 18, la paroi déflectrice 15 peut donc tourner autour de cet axe de rotation 17.

Du fait de l'orientation de l'axe de rotation 17 qui se trouve donc lorsque le véhicule roule sensiblement parallèle au flux d'air 10, les forces nécessaires pour déplacer la paroi déflectrice 15 entre les deux positions susmentionnées sont plutôt faibles. En effet, la force exercée par le flux d'air 10 sur la paroi déflectrice 15 est reprise via l'axe de rotation 17 par le support 11, et pour le déplacement de la paroi déflectrice 15, il n'est pas nécessaire d'exercer une force directe à l'encontre du flux d'air 10.

Selon un exemple, l'axe de rotation 17 et la paroi déflectrice 15 sont deux pièces distinctes fixées l'une à l'autre. On peut par exemple envisager que l'axe de rotation 17 est en métal et la paroi déflectrice est aussi en métal ou en matière plastique.

Pour déplacer la paroi déflectrice 15 entre les positions escamotée et déployée, le dispositif déflecteur aérodynamique 7 comprend en outre un actionneur 19 qui peut donc être dimensionné aussi bien en puissance, qu'en encombrement et en consommation assez petit.

L'actionneur 19 est par exemple un moteur électrique avec un organe de sortie rotatif en prise directement ou indirectement avec l'axe de rotation 17.

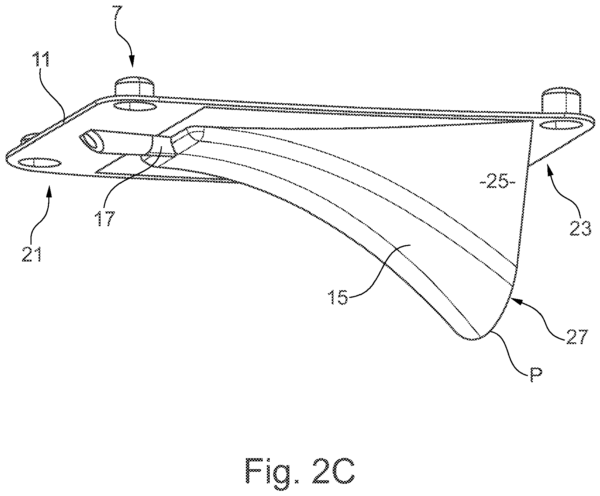

Les figures 2A, 2B et 2C montrent des schémas de côté du dispositif déflecteur aérodynamique 7 selon un second mode de réalisation dans trois positions différentes.

On voit mieux sur ces figures que le support 11 est réalisé en tant que cadre de forme rectangulaire et configuré à être fixé au châssis d'un véhicule automobile.

Ce second mode de réalisation se différencie de celui des figures 1A et 1B par le fait que la paroi déflectrice 15 possède en coupe longitudinale une forme de rampe incurvée. La rampe formant la paroi déflectrice 15 possède en particulier un rayon de courbure qui diminue progressivement depuis l'extrémité distale 21 destinée à être disposée éloignée de la roue 3 vers l'extrémité proximale 23 destinée à être disposée à proximité de la roue 3.

La paroi déflectrice 15 est en outre arrondie et flanquée de deux portions de paroi latérales droites 25. Ainsi la paroi déflectrice 15 possède à l'extrémité proximale 23 en coupe transversale une forme de « U », le fond du « U » étant éloigné de l'axe de rotation 17.

Pour éviter par exemple que de la boue puisse s'accumuler à l'intérieur du volume défini par la paroi déflectrice 15 et les parois latérales 25 par exemple droites, on prévoit de plus une paroi de fermeture 27 à l'extrémité proximale 23 et une paroi de fermeture 29 reliant les parois latérales 25. La paroi de fermeture 29 est donc dans les positions escamotée et déployée dans le même plan que le support 11 sous forme de cadre.

On définit ainsi un volume complètement fermé par ces diverses parois 15, 25, 27 et 29 qui peut tourner autour de lui-même de 360°. Ceci est encore un avantage car pour l'actionneur 19, on peut choisir par exemple un moteur électrique qui tourne dans un seul sens. De tels moteurs sont effectivement moins onéreux que ceux qui tournent dans les deux sens opposés et nécessitent une électronique de commande.

En outre, selon une variante, on peut prévoir que les diverses parois 15, 25, 27 et 29 ainsi que l'axe de rotation 17 sont réalisés d'une seule pièce par moulage et / ou injection, en particulier en matière plastique, notamment renforcée par des fibres comme par exemple des fibres de verre ou de carbone.

L'axe de rotation 17 portant la paroi déflectrice 15 est configuré pour permettre une rotation de 180° entre les positions escamotées et déployées.

En revenant vers les figures 1A et 1B, l'actionneur 19 est par exemple relié à une unité de commande 24 comprenant par exemple un circuit électronique tel qu'un microprocesseur ou un microcontrôleur recevant une information de vitesse depuis un capteur de vitesse, et ordonnant le déploiement ou la rétractation de la paroi déflectrice 15 en conséquence.

Selon une mise en œuvre possible, un mécanisme d'hystérésis est prévu afin d'éviter les effets de seuil. Ainsi, il est possible de prévoir que l'unité de commande 24 déclenche le déploiement de la paroi déflectrice 15 dès que la vitesse dépasse un seuil donné (par exemple 50km/h), mais que la rétractation du déflecteur n'est déclenchée que lorsque la vitesse redescend en dessous d'un seuil inférieur au seuil précité (par exemple un seuil de 40km/h).

Ainsi, le circuit évite de déclencher de façon intempestive des alternances de déploiement et de rétractation lorsque le véhicule circule à une vitesse proche du seuil initial et passe en permanence d'un côté et de l'autre de ce seuil.

Le seuil de déclenchement du déploiement (par exemple 50km/h) est choisi de façon à être suffisamment élevé pour que le déploiement ait un effet perceptible sur la traînée aérodynamique. La traînée varie avec le carré de la vitesse. Pour les vitesses faibles, la traînée est elle-même très faible. Déployer le déflecteur n'est alors pas utile.

Le seuil de déclenchement de la rétractation (par exemple 40 km/h) est choisi de façon à être suffisamment élevé pour que le conducteur puisse raisonnablement envisager le franchissement d'obstacles (trottoirs, dos d'âne, etc.) à la vitesse considérée. Ainsi, on évite que le véhicule automobile soit amené à franchir un tel obstacle (de nature à endommager le déflecteur) alors que le déflecteur est déployé.

Selon encore une autre variante, l'unité de commande 24 reçoit aussi des données de géolocalisation associées avec des informations sur la situation de conduite.

Ainsi par exemple, l'unité de commande 24 peut être configurée pour inhiber tout déploiement de la paroi déflectrice 15 en agglomération où la vitesse est limitée. En effet, c'est en agglomération qu'il y a le plus de risque de devoir franchir des obstacles pouvant endommager la paroi déflectrice 15.

Bien entendu, une telle unité de commande 24 est également prévue pour le mode de réalisation des figures 2A à 2C, même si cette unité n'est pas représentée sur les figures par souci de simplification.

Selon une autre variante non représentée, on peut aussi prévoir que la paroi déflectrice 15 possède seulement la forme d'un demi-disque qui peut être mis devant la roue 3 dans la position déployée en tournant autour de l'axe de rotation 17. Selon encore une autre variante, la paroi déflectrice 15 peut être formée seulement par une paroi ayant la même forme que la paroi de fermeture 27 des figures 2A à 2C.

On comprend donc que le dispositif déflecteur aérodynamique 7 selon l'invention permet d'améliorer la trainée aérodynamique du véhicule et donc en particulier la consommation en carburant du véhicule tout en permettant par son caractère commandé ou actif le franchissement d'obstacles à vitesse basse en toute sécurité.

## Revendications

1. Dispositif déflecteur aérodynamique (7) pour roue de véhicule automobile, comprenant :
- un support (11) allongé configuré pour être monté sur un véhicule automobile,
- une paroi déflectrice (15) monté mobile sur le support (11) entre
d'une part une position escamotée, dans laquelle, à l'état monté ladite paroi déflectrice (15) est relevée par rapport au support (11), et d'autre part une position déployée, dans laquelle, à l'état monté, ladite paroi déflectrice (15) est abaissée par rapport au support (11), et
- un actionneur (19) configuré pour déplacer ladite paroi déflectrice (15) entre les positions escamotée et déployée,
**caractérisé en ce que** la paroi déflectrice (15) est montée mobile en rotation sur le support (11) autour d'un axe de rotation (17) orienté sensiblement parallèle à un axe longitudinal du support (11) et entraîné par l'actionneur (19).

2. Dispositif selon la revendication 1, **caractérisé en ce que** la paroi déflectrice (15) possède en coupe longitudinale une forme de rampe.

3. Dispositif selon la revendication 2, **caractérisé en ce que** la rampe est incurvée.

4. Dispositif selon la revendication 3, **caractérisé en ce que** le rayon de courbure de la rampe incurvée diminue progressivement depuis l'extrémité distale (21) destinée à être disposée éloignée de la roue (3) vers l'extrémité proximale (23) destinée à être disposée à proximité de la roue (3).

5. Dispositif selon l'une quelconque des revendications 1 à 4, **caractérisé en ce que** la paroi déflectrice (15) possède à l'extrémité proximale (23) destinée à être disposée à proximité de la roue (3) en coupe transversale une forme de « U », le fond du « U » étant éloigné de l'axe de rotation (17).

6. Dispositif selon la revendication 5, **caractérisé en ce que** ledit dispositif comprend une paroi de fermeture (27) située à l'extrémité proximale (23) de la paroi déflectrice (15).

7. Dispositif selon l'une quelconque des revendications 1 à 6, **caractérisé en ce que** le support (11) est réalisé en tant que cadre de forme rectangulaire et configuré à être fixé au châssis d'un véhicule automobile.

8. Dispositif selon l'une quelconque des revendications 1 à 7, **caractérisé en ce que** l'actionneur (19) comprend un organe de sortie rotatif en prise directe ou indirecte avec ledit axe de rotation.

9. Dispositif selon l'une quelconque des revendications 1 à 8, **caractérisé en ce que** ledit axe de rotation (17) portant la paroi déflectrice est configuré pour effectuer une rotation de 180° entre les positions escamotée et déployée.

10. Véhicule automobile, **caractérisé en ce qu'**il comprend au moins un dispositif déflecteur aérodynamique (7) selon l'une quelconque des revendications 1 à 9 disposé en amont d'une roue (3) de véhicule.

## Patentansprüche

1. Aerodynamische ablenkende Vorrichtung (7) für ein Kraftfahrzeugrad, umfassend:
- einen länglichen Träger (11), der dazu ausgestaltet ist, an einem Kraftfahrzeug montiert zu werden,
- eine ablenkende Wand (15), die an dem Träger (11) beweglich montiert ist zwischen einerseits einer eingeklappten Position, in der die ablenkende Wand (15) im montierten Zustand in Bezug auf den Träger (11) angehoben ist, und einer ausgeklappten Position, in der die ablenkende Wand (15) im montierten Zustand in Bezug auf den Träger (11) abgesenkt ist, und
- einen Aktor (19), der dazu ausgestaltet ist, die ablenkende Wand (15) zwischen den eingeklappten und ausgeklappten Positionen zu verlagern,
**dadurch gekennzeichnet, dass** die ablenkende Wand (15) an dem Träger (11) drehbeweglich um eine Drehachse (17) montiert ist, die im Wesentlichen parallel zu einer Längsachse des Trägers (11) ausgerichtet ist, und von dem Aktor (19) angetrieben wird.

2. Vorrichtung nach Anspruch 1, **dadurch gekennzeichnet, dass** die ablenkende Wand (15) im Längsschnitt eine Rampenform besitzt.

3. Vorrichtung nach Anspruch 2, **dadurch gekennzeichnet, dass** die Rampe gekrümmt ist.

4. Vorrichtung nach Anspruch 3, **dadurch gekennzeichnet, dass** der Krümmungsradius der gekrümmten Rampe vom distalen Ende (21) aus, das dazu bestimmt ist, vom Rad (3) entfernt angeordnet zu werden, zum proximalen Ende (23) hin, das dazu bestimmt ist, in der Nähe des Rades (3) angeordnet zu werden, zunehmend abnimmt.

5. Vorrichtung nach einem der Ansprüche 1 bis 4, **dadurch gekennzeichnet, dass** die ablenkende Wand (15) am proximalen Ende (23), das dazu bestimmt ist, in der Nähe des Rades (3) angeordnet zu werden, im Querschnitt eine "U"-Form besitzt, wobei der Boden des "U" von der Drehachse (17) entfernt ist.

6. Vorrichtung nach Anspruch 5, **dadurch gekennzeichnet, dass** die Vorrichtung eine Verschlusswand (27) umfasst, die am proximalen Ende (23) der ablenkenden Wand (15) gelegen ist.

7. Vorrichtung nach einem der Ansprüche 1 bis 6, **dadurch gekennzeichnet, dass** der Träger (11) als rechteckiger Rahmen ausgeführt ist und dazu ausgestaltet ist, am Fahrgestell eines Kraftfahrzeugs befestigt zu werden.

8. Vorrichtung nach einem der Ansprüche 1 bis 7, **dadurch gekennzeichnet, dass** der Aktor (19) ein drehbares Austrittsorgan umfasst, das in direktem oder indirektem Eingriff mit der Drehachse steht.

9. Vorrichtung nach einem der Ansprüche 1 bis 8, **dadurch gekennzeichnet, dass** die Drehachse (17), welche die ablenkende Wand trägt, dazu ausgestaltet ist, eine Drehung um 180° zwischen den eingeklappten und ausgeklappten Positionen zu vollführen.

10. Kraftfahrzeug, **dadurch gekennzeichnet, dass** es mindestens eine aerodynamische ablenkende Vorrichtung (7) nach einem der Ansprüche 1 bis 9 umfasst, die stromauf eines Fahrzeugrades (3) angeordnet ist.

## Claims

1. Aerodynamic deflector device (7) for a motor vehicle wheel, comprising:
- an elongate support (11) configured to be mounted on a motor vehicle,
- a deflecting wall (15) mounted on the support (11) so as to be movable between, on the one hand, a retracted position in which, in the mounted state, said deflecting wall (15) is raised with respect to the support (11), and, on the other hand, a deployed position in which, in the mounted state, said deflecting wall (15) is lowered with respect to the support (11), and
- an actuator (19) configured to move said deflecting wall (15) between the retracted and deployed positions,
**characterized in that** the deflecting wall (15) is mounted rotatably on the support (11) about an axis of rotation (17) oriented substantially parallel to a longitudinal axis of the support (11) and driven by the actuator (19).

2. Device according to Claim 1, **characterized in that** the deflecting wall (15) has, in longitudinal section, a ramp shape.

3. Device according to Claim 2, **characterized in that** the ramp is curved.

4. Device according to Claim 3, **characterized in that** the radius of curvature of the curved ramp decreases progressively from the distal end (21) intended to be arranged remote from the wheel (3) toward the proximal end (23) intended to be arranged in the vicinity of the wheel (3).

5. Device according to any one of Claims 1 to 4, **characterized in that** the deflecting wall (15) has, at the proximal end (23) intended to be arranged in the vicinity of the wheel (3), in cross section, a "U" shape, the bottom of the "U" being remote from the axis of rotation (17).

6. Device according to Claim 5, **characterized in that** said device comprises a closure wall (27) situated at the proximal end (23) of the deflecting wall (15).

7. Device according to any one of Claims 1 to 6, **characterized in that** the support (11) is produced as a frame of rectangular shape and configured to be fixed to the chassis of a motor vehicle.

8. Device according to any one of Claims 1 to 7, **characterized in that** the actuator (19) comprises a rotary output member in direct or indirect engagement with said axis of rotation.

9. Device according to any one of Claims 1 to 8, **characterized in that** said axis of rotation (17) bearing the deflecting wall is configured to carry out a rotation of 180° between the retracted and deployed positions.

10. Motor vehicle, **characterized in that** it comprises at least one aerodynamic deflector device (7) according to any one of Claims 1 to 9 that is arranged upstream of a vehicle wheel (3).
